# EUROPÄISCHE PATENTSCHRIFT

(11) **EP 0 988 195 B1**
(45) Veröffentlichungstag und Bekanntmachung des Hinweises auf die Patenterteilung: **01.06.2005**
(21) Anmeldenummer: 99904690.7
(22) Anmeldetag: 02.01.1999
(51) Int. Cl.: B60S 1/38

(54) **VERFAHREN ZUM HERSTELLEN VON FLACHBALKEN-SCHEIBENWISCHERN FÜR FAHRZEUGE MIT GEBOGENEN FLACHBALKEN**
METHOD FOR PRODUCING FLAT BAR WINDSHIELD WIPERS PROVIDED FOR VEHICLES AND HAVING BENT FLAT BARS
PROCEDE POUR PRODUIRE DES ESSUIE-GLACES A BARRES PLATES DESTINES A DES VEHICULES ET COMPORTANT DES BARRES PLATES CINTREES

(30) Priorität: 15.04.1998 DE 19816609
(43) Veröffentlichungstag der Anmeldung: 29.03.2000
(73) Patentinhaber: ROBERT BOSCH GMBH, 70442 Stuttgart (DE)
(72) Erfinder: WILHELM, Manfred, D-71735 Eberdingen (DE); MAZURKIEWICZ, Julius, B-3290 Diest (BE)
(86) Internationale Anmeldenummer: PCT/DE1999/000001
(87) Internationale Veröffentlichungsnummer: WO 1999/052753

(56) Entgegenhaltungen:
- EP-A- 0 032 795
- EP-A- 0 594 451
- US-A- 4 391 116
- US-A- 4 532 794

## Beschreibung

### Stand der Technik

Die Erfindung betrifft ein Verfahren zum Herstellen von Flachbalken-Scheibenwischern für Fahrzeuge mit gebogenen Flachbalken, insbesondere mit über die Balkenlänge variierender Materialstärke.

Solche Flachbalken-Scheibenwischer sind aus der US-A-3 192 551 bekannt. Bei ihnen erzeugt ein einziger Federbandrücken, an dem mittig der Wischerarm des Scheibenwischers angreift, einen nahezu gleichmäßigen Andruck der am Rücken befestigten Gummiwischleiste auf der in der Regel gewölbten Oberfläche der Windschutzscheibe über den gesamten Wischbereich. Der gebogene Federbandrücken weist hierzu eine über seine Länge sich ändernde Materialstärke auf, die maximal in Rückenmitte ist und zu den beiden Rückenenden hin abnimmt, und hat eine sich änderende Rückenbreite, die ebenfallls von Rückenmitte zu den Rückenenden hin abnimmt.

Aus der WO-A-94/17932 ist ein Verfahren und eine Vorrichtung zum Herstellen von Metallstreifen mit variierender Materialstärke bekannt, wie sie als Teil von Windschutzscheibenwischern gebraucht werden. Dabei wird ein Bandmaterial konstanter Dicke und Breite durch ein Paar einander gegenüberliegenden Walzen gezogen, wobei der Abstand der Walzen variiert wird, um so das Bandmaterial mit über dessen Länge abschnittsweise unterschiedlicher Dicke zu formen, und anschließend einer Wärmebehandlung unterzogen.

### Vorteile der Erfindung

Das erfindungsgemäße Verfahren zum Herstellen von Flachbalken-Scheibenwischern mit gebogenen Flachbalken mit den Merkmalen des Anspruchs 1 hat den Vorteil, daß in einem einzigen Verfahrensgang Flachbalken, wie sie unmittelbar als Teil von Flachbalken-Scheibenwischern benötigt werden, von einem vergüteten Federbandrohling mit variabler Materialstärke gefertigt werden. Das Biegen und Rückbiegen erfolgt dabei unter kontinuierlichem Federbandvorschub, der zum Abtrennen der Flachbalken jeweils kurzzeitig unterbrochen wird. Das erfindungsgemäße Verfahren liefert weitgehend toleranzgenau endgefertigte Flachbalken mit vorgegebenen Biegeradien, die absolut formstabil sind und sich auch beim Abtrennen vom Bandmaterial nicht mehr verformen. Dadurch, daß die mittlere der drei Auflagestellen für die Federbandbiegung und die vierte Auflagestelle für die Federbandrückbiegung jeweils quer zum Federband in Richtung Banddicke verschiebbar ausgebildet sind und ihre Querverschiebungen relativ zum Federband nach vorgegebenen Programmen gesteuert werden, die die sich ändernde Materialstärke innerhalb der Flachbalken berücksichtigt, wird das Federband in allen Bereichen gleichermaßen plastisch verformt. Gleichzeitig können auch verschiedene Biegeradien innerhalb eines Flachbalkens realisiert werden. In den Programmen zur Steuerung der Verschiebebewegung der beiden Auflagestellen werden neben der variablen Materialstärke und der ggf. gewünschten, zonenbezogen unterschiedlichen Biegeradien der Flachbalken auch andere das Fertigungsergebnis beeinflussende Parametern berücksichtigt, wie Bandhärte, Bandbreite, vorheriges Richten des Federbandes, Wicklungssinn des Federbandes auf einer Vorratsspule, etc.

Durch die in den weiteren Ansprüchen aufgeführten Maßnahmen sind vorteilhafte Weiterbildungen und Verbesserungen des im Anspruch 1 angegebenen Verfahrens möglich.

Zur Einhaltung höchster Fertigungstoleranzen wird gemäß einer vorteilhaften Weiterbildung des erfindungsgemäßen Verfahrens zumindest ein Teil der abgetrennten Flachbalken optisch vermessen und mit Sollwertvorgaben verglichen. Die mittleren Abweichungen von den Sollwerten werden zur Korrektur der Biege- und Rückbiegeprogramme verwendet.

### Zeichnung

Die Erfindung ist anhand eines in der Zeichnung dargestellten Ausführungsbeispiels einer Vorrichtung in der nachfolgenden Beschreibung näher erläutert. Es zeigen jeweils in schematischer Darstellung:
- Fig. 1: eine Seitenansicht einer Vorrichtung zum Herstellen gebogener Flachbalken für Flachbalken-Scheibenwischer,
- Fig. 2: ausschnittweise eine vergrößerte Seitenansicht eines zur Herstellung der gebogenen Flachbalken verwendeteten Federbands mit variabler Materialstärke,
- Fig. 3: eine Seitenansicht eines Flachbalken-Scheibenwischers.

### Beschreibung des Ausführungsbeispiels

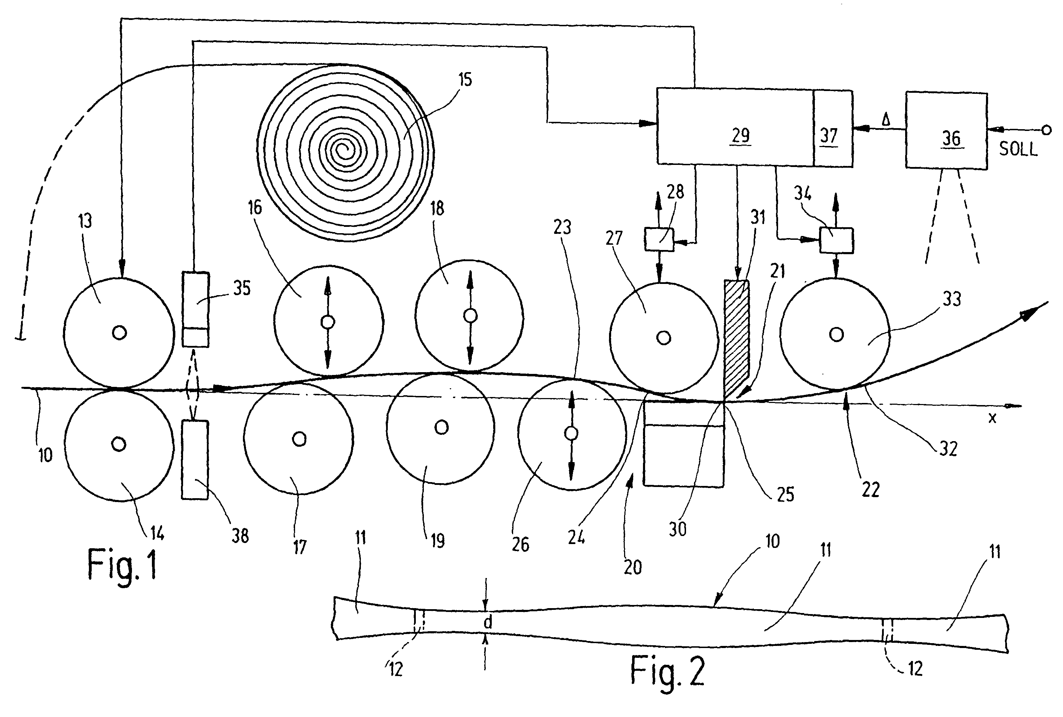

Der in Fig. 1 schematisch in Seitenansicht dargestellten Vorrichtung zum Herstellen gebogener Flachbalken für Flachbalken-Scheibenwischer wird ein Federband 10 zugeführt, wie es in Fig. 2 ausschnittweise und vergrößert schematisch dargestellt ist. Im Federband 10 sind einzelne, gleichartige Flachbalken 11 hintereinander fortlaufend festgelegt, deren Anfang und Ende durch sog. Triggerlöcher 12 im Federband 10 markiert sind. Innerhalb eines jeden Flachbalkens 11 variiert die Materialstärke oder Banddicke d des Federbandes 10, wie dies in Fig. 2 verdeutlicht ist. In einem realistischen Ausführungsbeispiel schwankt dabei die Banddicke d zwischen einem maximalen Wert von 1,2mm und einen Minimalwert von 0,4mm, wobei die Banddicke d von der Mitte eines jeden Flachbalkens 11 zu den beiden Enden hin abnimmt.

Die Vorrichtung weist in Federbanddurchlauf- oder -vorschubrichtung hintereinander angeordnet zwei auf gegenüberliegenden Bandseiten des Federbands 10 angreifende Vorschubrollen 13,14, die motorisch angetrieben und NC-gesteuert sind und das Federband 10 von einem Vorratswickel 15 abziehen, mehrere, hier vier, ggf. auch sechs Führungsrollen 16 - 19, die paarweise auf gegenüberliegenden Bandseiten des Federbandes 10 angreifen und antriebslos sind, eine Biegeeinheit 20, eine Trenneinheit 21 und eine Rückbiegeeinheit 22 auf. Die beiden auf der Oberseite des Federbands 10 angreifenden Führungsrollen 16,18 sind in Vertikalrichtung, also rechtwinklig zum Federband 10, verschiebbar ausgebildet und können manuell verstellt werden, um eine enge Führung des Federbandes 10 ohne Möglichkeit zum Ausknicken zu gewährleisten.

Die Biegeeinheit 20 umfaßt drei voneinander beabstandete Auflagestellen 23 - 25, die in Durchlaufrichtung des Federbandes 10 aufeinanderfolgend abwechselnd an der einen und anderen Bandseite anliegen. Die in Vorschubrichtung des Federbandes 10 gesehene erste und zweite Auflagestelle 23,24 werden jeweils vom Umfang einer Walze oder Rolle 26 bzw. 27 gebildet, deren Achsen quer zum Federband 10 in Richtung der Banddicke d verschieblich ausgebildet sind. Die erste Rolle 26 ist dabei manuell verstellbar, während die Verstellung der zweiten Rolle 27, im folgenden Biegerolle 27 genannt, von einem Stellmotor 28 bewirkt wird, der von einer NC-Steuereinheit 29 gesteuert wird. Die dritte Auflagestelle 25 der Biegeeinheit 20 wird von einer Schnittkante 30 gebildet, die größer ist als die Breite des Federbandes 10 und zum Abtrennen eines Flachbalkens 11 mit einem Schneidmesser 31 zusammenwirkt, das vertikal, also quer zum Federband 10, bewegt und an der Schnittkante 30 vorbeigeführt wird. Schnittkante 30 und Schneidmesser 31 bilden die Trenneinheit 21, die damit am Ende der Biegeeinheit 20 angeordnet und durch die Auslegung der vierten Auflagestelle 32 als Schnittkante 30 in die Biegeeinheit 20 integriert ist.

Die der Trenneinheit 21 nachgeordnete Rückbiegeeinheit 22 besteht aus einer auf der gleichen Bandseite des Federbandes 10 wie die mittlere Auflagestelle 24 der Biegeeinheit 20, also wie die Biegerolle 27, angreifenden vierten Auflagestelle 32, die hier ebenfalls von dem Umfang einer Walze oder Rolle, der sog. Rückbiegerolle 33, gebildet ist. Die Rollenachse der Rückbiegerolle 33 ist ebenfalls quer zum Federband 10 in Richtung der Banddicke d verschiebbar ausgebildet. Die Verschiebung der Rückbiegerolle 33, die sog. Zustellung, wird wiederum mittels eines Stellmotors 34 bewirkt, der von der NC-Steuereinheit 29 gesteuert wird.

Mit der so beschriebenen Vorrichtung werden die gebogenen Flachbalken wie folgt hergestellt: Das von dem Vorratswickel 15 kontinuierlich abgezogene Federband 10 wird zwischen den drei Auflagestellen 23 - 25 der Biegeeinheit 20 abschnittsweise gebogen, wobei der Biegeradius durch entsprechende Zustellung der mittleren Auflagestelle 24 bestimmt wird. Anschließend wird der so gebogene Flachbalken 11 an der nachfolgenden vierten Auflagestelle 32 in Gegenrichtung wieder zurückgebogen, wobei der Grad der Rückbiegung wesentlich geringer ist als der Biegegrad. Der Rückbiegegrad, der erforderlich ist, um die Formstabilität des gebogenen Flachbalkens 11 zu gewährleisten, wird empirisch ermittelt. Als mittleren Wert hat sich je nach Qualität des Federbandes 10 ein Rückbiegegrad erwiesen, der etwa 10 - 20% der zuvor erfolgten Biegung beträgt. Da der Biegeradius des endgefertigten Flachbalkens 11 vorgegebenen ist, wird die Biegung des Federbands 10 zwischen den drei Auflagestellen 23 - 25 mit einem um den Rückbiegegrad an der vierten Auflagestelle 32 vergrößernden Biegegrad durchgeführt.

Die Zustellbewegung für die mittlere Auflagestelle 24 zur Federbandbiegung und für die vierte Auflagestelle 32 für die Federbandrückbiegung wird nach vorgegebenen Programmen gesteuert, die insbesondere die sich ändernde Materialstärke des Flachbalkens berücksichtigt. Zusätzlich können in den Programmen noch gewünschte, zonenbezogen unterschiedliche Biegeradien innerhalb des Flachbalkens berücksichtigt werden. Ebenso werden in den Programmen weitere das Fertigungsergebnis beeinflussende Parameter, wie Bandhärte, Bandbreite, vorheriges Richten des Federbandes, Wicklungssinn des Federbandes auf dem Vorratswickel 15, etc., berücksichtigt. Die beschriebene Steuerung der Zustellbewegungen der Auflagestellen 24 und 32 wird mit der NC-Steuereinheit 29 bewirkt, welche die Stellmotoren 28 und 34 in Abhängigkeit der NC-Achse (x-Achse) der Vorschubwalzen ansteuert, die ihrerseits eine Verschiebung der Achse der die mittlere Auflagestelle 24 bildenden Biegerolle 27 bzw. der die Auflagestelle 32 bildenden Rückbiegerolle 33 um ein entsprechenden Betrag auf das Federband 10 zu oder von diesem weg verschieben. Die Triggerung der NC-Steuereinheit 29 erfolgt durch die Triggerlöcher 12 im Federband 10. Die Triggerlöcher 12 werden von einem mit einer Lichtquelle 38 zusammenwirkenden, vor den Führungsrollen 16 - 19 angeordneten, optischen Sensor 35 erkannt, der daraufhin ein Triggersignal an die Steuereinheit 29 liefert und dadurch den Programmablauf aufruft. Die Triggerlöcher 12 bestimmen damit Anfang und Ende der Biege- und Rückbiegeprogramme, denen die einzelnen Flachbalken 11 unterworfen werden, und des anschließenden Trennvorgangs, indem die Steuereinheit 29 auch die Schneidbewegung des Schneidmessers 31 nach Ablauf der Programme auslöst. Zum Abtrennen der endgebogenen Flachbalken 11 vom Federband 10 wird jeweils der kontinuierliche Vorschub des Federbandes 10 kurzzeitig unterbrochen.

Zur Erzielung geringer Fertigungstoleranzen wird zumindest ein Teil der Flachbalken 11 optisch vermessen, was vor oder nach dem Abtrennen erfolgen kann, und mit Sollwertvorgaben verglichen. Die mittleren Abweichungen von den Sollwerten werden zur Korrektur der Biege- und Rückbiegeprogramme verwendet. Hierzu ist ein Bilderfassungssystem 36 vorgesehen, mit welchen die optische Vermessung der endgefertigten Flachbalken 11 durchgeführt und die Abweichungen von den Sollwertvorgaben ermittelt werden. Das Bilderfassungssystem 36 ist mit einer Korrektureinrichtung 37 verbunden, die entsprechend den Sollwertabweichungen geeignete Parameter in den Programmen der NC-Steuereinheit 29 verändert, so daß ein Regelkreis zur Biegegradkorrektur entsteht. Die in der NC-Einheit abgespeicherten Programme sind auf eine bestimmte Form der endgefertigten Flachbalken 11 abgestimmt und müssen für veränderte Formen der Flachbalken 11 neu erstellt bzw. entsprechend modifiziert werden.

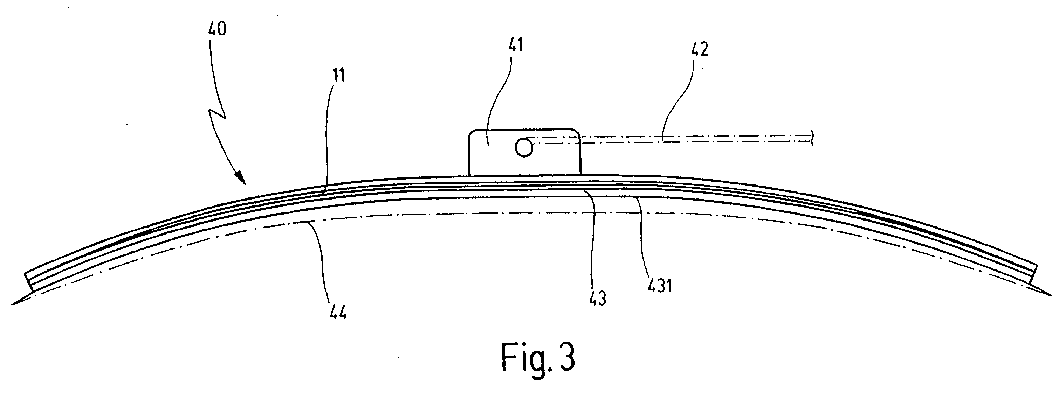

Zum Herstellen eines Flachbalken-Scheibenwischers 40, wie er in Fig. 3 in Seitenansicht dargestellt ist, wird der wie vorstehend beschrieben gefertigte Flachbalken 11 mit einer Anschlußvorrichtung 41 für einen Wischerarm 42 versehen, oberflächenvergütet und mit einer gummielastischen Wischleiste 43 vereinigt. Der in Fig. 3 strichpunktiert angedeutete Wischerarm 42 wird in bekannter Weise von einem Wischergetriebe in Schwenkbewegung versetzt, wodurch die Wischkante 431 der Wischleiste 43 über die mit 44 strichpunktiert angedeutete Scheibe bewegt wird. Das Anbringen der Wischleiste 43 kann derart erfolgen, daß der Flachbalken 11 in eine ebene Lage gedrückt wird und daß die Wischleiste 43 auf der im entlasteten Zustand konkaven Seite aufgeklebt oder aufvulkanisiert wird. Es ist jedoch auch möglich, die Wischleiste 43 zwischen zwei gleichermaßen hergestellten Flachbalken einzuklemmen, wobei die beiden Flachbalken dann durch die noch anzubringende Anschlußvorrichtung und ggf. weiteren Klammern zusammengehalten werden. Hierbei ist es wichtig, daß die beiden Flachbalken exakt den gleichen Biegeverlauf aufweisen, um Spannungen im Wischblatt zu vermeiden.

## Patentansprüche

1. Verfahren zum Herstellen von Flachbalken-Scheibenwischern für Fahrzeuge,mit gebogenen Flachbalken (11) und insbesondere mit über die Balkenlänge variabler Materialstärke (d), wobei ein von den einstückig aneinander angeordneten Flachbalken (11) gebildetes Federband (10) zwischen drei in Federbandvorschubrichtung voneinander beabstandeten, aufeinanderfolgend abwechselnd auf einer der beiden Bandseiten des Federbandes (10) anliegenden Auflagestellen (23-25) gebogen und anschließend an einer nachfolgenden Auflagestelle (32) um einen demgegenüber geringeren Biegegrad in Gegenrichtung wieder zurückgebogen wird und wobei nachfolgend der so behandelte Flachbalken (11) vom Federband (10) abgetrennt wird, **gekennzeichnet durch** die Verfahrensschritte:
- Vereinigen des Flachbalkens (11) mit einer gummielastischen Wischleiste (43) und
- Anbringen einer Anschlußvorrichtung (41) für einen Wischerarm (42).

2. Verfahren nach Anspruch 1, **dadurch gekennzeichnet, daß** der Biegegrad des Federbandes (10) in den drei Auflagestellen (23-25) um den Rückbiegegrad an der vierten Auflagestelle (32) größer eingestellt wird als der geforderte Endbiegeradius des Flachbalkens (11).

3. Verfahren nach Anspruch 1 oder 2, **dadurch gekennzeichnet, daß** der Rückbiegegrad empirisch bestimmt wird.

4. Verfahren nach Anspruch 1 oder 2, **dadurch gekennzeichnet, daß** der Rückbiegegrad mit 10 - 20% des Biegegrads gewählt wird.

5. Verfahren nach einem der Ansprüche 1 - 4, **dadurch gekennzeichnet, daß** die mittlere der drei Auflagestellen (24) für die Federbandbiegung und die vierte Auflagestelle (24) für die Federbandrückbiegung jeweils quer zum Federband (10) in Richtung Banddicke (d) verschiebbar ausgebildet und ihre Querverschiebungen relativ zum Federband (10) nach vorgegebenen Programmen gesteuert werden, die die sich ändernde Materialstärke innerhalb der Flachbalken (11) berücksichtigen.

6. Verfahren nach einem der Ansprüche 1 - 5, **dadurch gekennzeichnet, daß** die letzte der drei Auflagestellen (26) für die Federbandbiegung als Schnittkante (30) ausgebildet wird, an der zur Abtrennung der Flachbalken (11) ein Schneidmesser (31) vorbeigeführt wird.

7. Verfahren nach Anspruch 6, **dadurch gekennzeichnet, daß** die übrigen Auflagestellen (23,24,32) vom Umfang einer Walze oder Rolle (26,27,33) gebildet werden.

8. Verfahren nach einem der Ansprüche 5 - 7, **dadurch gekennzeichnet, daß** die im Federband (10) aufeinanderfolgenden Flachbalken (11), vorzugsweise durch Triggerlöcher (12) im Federband (10) markiert sind und daß die Markierungen (Triggerlöcher 12) zum Steuern von Anfang und Ende der Biege- und Rückbiegeprogramme sowie zum Auslösen des Trennvorgangs verwendet werden.

9. Verfahren nach einem der Ansprüche 1 - 8, **dadurch gekennzeichnet, daß** zumindest ein Teil der Flachbalken (11) optisch vermessen und mit Sollwertvorgaben verglichen wird und daß die mittleren Abweichungen von den Sollwerten zur Korrektur der Biege- und Rückbiegeprogramme verwendet werden.

10. Verfahren nach einem der Ansprüche 1 - 9, **dadurch gekennzeichnet, daß** das Biegen und Rückbiegen des Federbandes (10) mit kontinuierlichem Federbandvorschub durchgeführt wird, der zum Abtrennen der Flachbalken (11) jeweils kurzzeitig unterbrochen wird.

11. Verfahren nach einem der Ansprüche 1 - 11, **dadurch gekennzeichnet, daß** der Flachbalken (11) oberflächenvergütet wird.

## Claims

1. Method for producing flat bar windscreen wipers for vehicles, having bent flat bars (11) and, in particular, having a material thickness (d) which is variable over the length of the bar, a spring strip (10), which is formed by the flat bars (11) arranged next to one another as a single piece, being bent between three supporting points (23-25), which are spaced apart from one another in the advancing direction of the spring strip and bear in an alternating manner following one another on one of the two strip sides of the spring strip (10), and subsequently being bent back again in the opposite direction by a smaller degree of bending in comparison at a following supporting point (32), and the flat bar (11) treated in this manner subsequently being severed from the spring strip (10), **characterized by** the following method steps:
- joining the flat bar (11) to an elastomeric wiper strip (43), and
- fitting a connecting device (41) for a wiper arm (42).

2. Method according to Claim 1, **characterized in that** the degree of bending of the spring strip (10) in the three supporting points (23-25) is set to be larger about the degree of bending back at the fourth supporting point (32) than the final bending radius required for the flat bar (11).

3. Method according to Claim 1 or 2, **characterized in that** the degree of bending back is determined empirically.

4. Method according to Claim 1 or 2, **characterized in that** the degree of bending back is selected to be 10-20% of the degree of bending.

5. Method according to one of Claims 1-4, **characterized in that** the central of the three supporting points (24) for the bending of the spring strip and the fourth supporting point (24) for the bending back of the spring strip are designed such that they can be displaced in each case transversely with respect to the spring strip (10) in the direction of the strip thickness (d) and their transverse displacements relative to the spring strip (10) are controlled according to predetermined programmes which take into account the changing material thickness within the flat bars (11).

6. Method according to one of Claims 1-5, **characterized in that** the last of the three supporting points (26) for the bending of the spring strip is designed as a cutting edge (30) past which a cutting knife (31) is guided in order to sever the flat bars (11).

7. Method according to Claim 6, **characterized in that** the remaining supporting points (23, 24, 32) are formed by the circumference of a cylinder or roller (26, 27, 33).

8. Method according to one of Claims 5-7, **characterized in that** the flat bars (11) following one another in the spring strip (10) are marked preferably by trigger holes (12) in the spring strip (10) and **in that** the markings (trigger holes 12) are used for controlling the beginning and end of the bending and bending-back programmes and for initiating the separating process.

9. Method according to one of Claims 1-8, **characterized in that** at least part of the flat bars (11) is measured visually and compared with desired-value stipulations, and **in that** the average deviations from the desired values are used for correcting the bending and bending-back programmes.

10. Method according to one of Claims 1-9, **characterized in that** the bending and bending back of the spring strip (10) is carried out with continuous advancing of the spring strip that is interrupted briefly in each case in order to sever the flat bars (11).

11. Method according to one of Claims 1-10, **characterized in that** the spring bar (11) is provided with an anti-reflective coating.

## Revendications

1. Procédé de fabrication d'essuie-glaces à barres plates pour des véhicules, comportant des barres plates courbées (11) que présente notamment une épaisseur du matériau (d) qui varie sur la longueur de la barre, procédé selon lequel une bande élastique (10) constituée par les barres plates (11) se suivant en formant une seule pièce, est courbée entre trois points d'appui (23 à 25) qui se suivent selon la direction d'avancement de la bande élastique en étant espacés les uns des autres et situés sur un des deux côtés de cette bande, puis en un point d'appui (32) qui suit, est courbée en sens inverse selon un degré de flexion plus faible, et enfin la barre plate (11) ainsi traitée est séparée de la bande élastique (10),
**caractérisé par** les étapes suivantes :
- réunion de la barre plate (11) et d'une lame d'essuyage (43) élastique comme du caoutchouc,
- mise en place d'un dispositif de raccordement (41) pour un bras d'essuie-glace (42).

2. Procédé de fabrication selon la revendication 1,
**caractérisé en ce que**
le degré de flexion de la bande élastique (10) aux trois points d'appui (23 à 25) est réglé de manière à dépasser le rayon de courbure final demandé pour la barre plate (11) de la valeur de la flexion inverse exercée au quatrième point d'appui (32).

3. Procédé de fabrication selon la revendication 1 ou 2,
**caractérisé en ce que**
le degré de flexion inverse est déterminé empiriquement.

4. Procédé de fabrication selon la revendication 1 ou 2,
**caractérisé en ce que**
le degré de flexion inverse est choisi égal à 10 - 20 % du degré de flexion directe.

5. Procédé de fabrication selon une des revendications 1 à 4,
**caractérisé en ce que**
le point milieu des trois points d'appui (24) et le quatrième point d'appui pour la flexion inverse de la bande peuvent chacun coulisser par rapport à la bande (10) dans le sens de l'épaisseur (d) de celle-ci, et les déplacements transversaux de ces points par rapport à la bande élastique (10) sont commandés selon des programmes prédéfinis qui prennent en compte la variation de l'épaisseur du matériau de la barre plate (11).

6. Procédé de fabrication selon une des revendications 1 à 5,
**caractérisé en ce que**
le dernier (26) des trois points d'appui, assurant la flexion directe de la bande, est constitué en arête de coupe (30) le long de laquelle défile une lame de coupe (31) servant à séparer la barre plate (11).

7. Procédé de fabrication selon la revendication 6,
**caractérisé en ce que**
les autres points d'appui (23, 24, 32) se trouvent sur la périphérie d'un cylindre ou d'un galet correspondant (26, 27, 33).

8. Procédé de fabrication selon une des revendications 5 à 7,
**caractérisé en ce que**
les barres plates (11) qui se suivent dans la bande élastique (10) sont repérées dans celle-ci de préférence par des trous de déclenchement (17) et ces repères (trous 17) sont utilisés pour commander le début et la fin des programmes de flexion directe et inverse, ainsi que pour déclencher l'opération de séparation.

9. Procédé de fabrication selon une des revendications 1 à 8,
**caractérisé en ce qu'**
au moins une partie des barres plates (11) est mesurée optiquement et comparée à des valeurs de consigne prédéfinies, les écarts moyens constatés par rapport à ces valeurs étant utilisés pour corriger les programmes de flexion directe et inverse.

10. Procédé de fabrication selon une des revendications 1 à 9,
**caractérisé en ce que**
la flexion directe et la flexion inverse de la bande élastique (10) sont effectuées pendant l'avancement en continu de cette bande, qui est interrompu très brièvement chaque fois pour séparer les barres plates (11).

11. Procédé de fabrication selon une des revendications 1 à 10,
**caractérisé en ce que**
la barre plate (11) reçoit un traitement superficiel.
